# FASCICULE DE BREVET EUROPEEN

(11) **EP 2 515 405 B1**
(45) Date de publication et mention de la délivrance du brevet: **04.06.2014**
(21) Numéro de dépôt: 12354017.1
(22) Date de dépôt: 06.03.2012
(51) Int. Cl.: H02H 6/00

(54) **Ensemble de protection thermique et procédé utilisant un tel ensemble**
Wärmeschutzeinheit und Verfahren, bei dem eine solche Einheit verwendendet wird
Thermal protection assembly and method using such an assembly

(30) Priorité: 22.04.2011 FR 1101275
(43) Date de publication de la demande: 24.10.2012
(73) Titulaire: Schneider Electric Industries SAS, 92500 Rueil-Malmaison (FR)
(72) Inventeur: Blondel, Charles, 38050 Grenoble Cedex 09 (FR); Brun, Jérôme, 38050 Grenoble Cedex 09 (FR)
(74) Mandataire: Picard, Laurent

(56) Documents cités:
- EP-A1- 0 019 885
- EP-A1- 2 207 041
- WO-A1-2005/074090
- US-A- 5 579 194

## Description

### DOMAINE TECHNIQUE DE L'INVENTION

L'invention est relative à un ensemble de protection thermique destiné à la protection d'une charge et comprenant une unité de contrôle reliée par des moyens de communication à au moins un bloc de protection déporté. Ledit bloc comprend des moyens de mesure du courant électrique circulant dans la charge et des premiers moyens intégrateur calculant une première valeur d'intégration correspondant à l'intégration en continu du courant électrique pendant une première durée d'intégration.

L'invention est aussi relative à un procédé pour déterminer un état de fonctionnement thermique d'une charge en mettant en oeuvre l'ensemble de protection thermique selon l'invention.

### ETAT DE LA TECHNIQUE ANTERIEURE

La protection électrique d'une charge par des dispositifs de protection est couramment envisagée. Il est alors indispensable d'adapter le type de dispositif de protection aux défauts possibles rencontrés et susceptibles d'endommager la charge.

Pour des défauts de type « court-circuit », il est généralement utilisé un fusible ou un disjoncteur. Pour le défaut de type « surcharge », il est préconisé d'utiliser un dispositif communément appelé « relais thermique ».

Un relais thermique comporte à la fois des moyens d'analyse thermique de la charge alimentée par une ligne électrique et des moyens pour commander l'ouverture d'un dispositif de coupure ou de commutation de ladite ligne lorsqu'un niveau thermique prédéfini est atteint. En pratique, lesdits moyens pour commander sont des contacts « secs » généralement connectés en série avec le circuit de commande d'un contacteur.

Lorsqu'une installation électrique comporte plusieurs charges réparties respectivement sur plusieurs branches, il est alors nécessaire de prévoir un relais thermique par branche supportant une charge nécessitant une protection contre les surcharges. Ainsi plus l'installation est complexe et comporte de charges, plus le cout lié à la protection thermique tend à augmenter.

En outre, lorsque le relais thermique comporte des moyens de détection de type bilame, la mise au point du seuil de déclenchement de chaque bilame adaptée à la nature de la charge peut s'avérer délicate. Ceci est particulièrement vrai lorsque le calibre de courant du relais thermique est faible.

Par ailleurs, lorsque le relais thermique comporte des moyens de détection thermique de type électronique, le cout global de protection est alors assez important. En effet, un relais thermique « dit électronique » est par nature assez couteux. Il comporte en effet des moyens de mesure de courant, une unité de calcul pour déterminer le niveau thermique, et une réserve d'énergie pour sauvegarder le niveau thermique en cas de disparition de l'alimentation (dénommé « mémoire thermique » selon la norme IEC 947-4-2).

Enfin, les relais thermique actuels comportant des bilames ou une détection électronique sont généralement destinés à la protection de charges alternatives telle que notamment un moteur asynchrone. La courbe de déclenchement du relais thermique ne peut alors pas être adaptée correctement à celle de charge présentant des caractéristiques différentes tels qu'un moteur spécial, une résistance, des cellules photovoltaïque ou une batterie.

A titre d'exemple d'application, le relais thermique peut être destiné à protéger un moteur contre les surcharges. Cependant pendant la phase de démarrage, il doit laisser passer les surcharges temporaire dues à la pointe de courant et déclencher uniquement si cette pointe, c'est-à-dire la durée de démarrage, est anormalement longue. Selon les applications, la durée normale de démarrage des moteurs peut varier de quelques secondes (démarrage à vide) à quelques dizaines de secondes. Le choix du relais thermique est alors fait en choisissant la meilleure adéquation entre différents calibres de relais thermique (en ampère) et le temps de démarrage du moteur (classe 10, 10A, 20 ou 30A). Cette adéquation plus ou moins judicieuse ne garantit pas toujours une protection optimale de la charge.

La demande de brevet européenne EP0019885 décrit la surveillance des surcharges d'un appareil électrique, en particulier d'un moteur électrique.

Un circuit évalue l'intégrale du courant comme modèle thermique de l'appareil électrique à surveiller. Le temps de refroidissement de l'appareil électrique est pris en compte afin de permettre une surveillance des surcharges en cas de redémarrage ou de fonctionnement intermittent.

### EXPOSE DE L'INVENTION

L'invention vise donc à remédier aux inconvénients de l'état de la technique, de manière à proposer un ensemble de protection thermique polyvalent et efficace.

L'unité de contrôle de l'ensemble de protection thermique selon l'invention comporte des seconds moyens intégrateurs calculant une seconde valeur d'intégration pendant une seconde durée d'intégration, ladite seconde valeur correspondant à l'intégration des premières valeurs d'intégration communiquées à l'unité de contrôle après chaque première durée d'intégration. Des moyens de calcul déterminent un état de fonctionnement thermique de la charge à partir d'une comparaison entre la seconde valeur d'intégration et un seuil de température maximale fixée.

Selon un mode de développement de l'invention, la première durée d'intégration est directement dépendante d'un temps d'échange réseau entre les blocs de protection déportés et l'unité de contrôle, la première durée d'intégration étant décorrélée du temps de cycle de l'unité de contrôle.

Selon un mode particulier de réalisation, la première durée d'intégration est variable dans le temps.

Avantageusement, la première durée d'intégration est comprise entre 10 et 1000 ms.

Selon un mode de développement de l'invention, les seconds moyens intégrateurs calculent la seconde valeur d'intégration en continu, les premières valeurs d'intégration étant pondérées par un coefficient de dissipation thermique.

De préférence, le coefficient de dissipation thermique est soustrait à la première valeur d'intégration.

Selon un mode particulier de réalisation, l'unité de contrôle comporte des moyens commande destinés à être reliés à un dispositif de coupure par des moyens de communication et étant aptes à envoyer un ordre d'ouverture dudit dispositif en fonction de l'état de fonctionnement thermique.

De préférence, l'unité de contrôle comporte des moyens de mémorisation mémorisant le coefficient de dissipation thermique représenté à partir d'une mise en équations spécifiques dépendante du type de charge.

De préférence, l'unité de contrôle comporte des moyens de mémorisation mémorisant le coefficient de dissipation thermique sous forme d'un tableau de données contenant une pluralité de valeurs de l'état de fonctionnement thermique et de type de charge.

Le procédé pour déterminer un état de fonctionnement thermique d'une charge selon l'invention consiste à :
mesurer le courant électrique circulant dans la charge ;
calculer une première valeur d'intégration correspondant à l'intégration en continu du courant électrique pendant une première durée d'intégration ;
calculer une seconde valeur d'intégration pendant une seconde durée d'intégration, ladite seconde valeur correspondant à l'intégration des premières valeurs d'intégration communiquées à l'unité de contrôle après chaque première durée d'intégration ;
déterminer un état de fonctionnement thermique de la charge à partir d'une comparaison entre la seconde valeur d'intégration et un seuil de température maximale fixée.

Selon un mode de développement de l'invention, la seconde valeur d'intégration est calculée en continu par les seconds moyens intégrateurs, les premières valeurs d'intégration étant pondérées par un coefficient de dissipation thermique.

De préférence, une étape du procédé selon l'invention consiste à envoyer un ordre d'ouverture à un dispositif de coupure relié à l'unité de contrôle en fonction de l'état de fonctionnement thermique déterminé.

### BREVE DESCRIPTION DES FIGURES

D'autres avantages et caractéristiques ressortiront plus clairement de la description qui va suivre de modes particuliers de réalisation de l'invention, donnés à titre d'exemples non limitatifs, et représentés aux dessins annexés sur lesquels :
- la figure 1 représente une vue schématique de l'ensemble de protection thermique selon un mode de réalisation de l'invention ;
- la figure 2 représente une vue schématique fonctionnelle d'un bloc de protection et d'une unité de contrôle de l'ensemble de protection thermique selon la figure 1 ;
- la figure 3 représente une vue schématique fonctionnelle d'un bloc de protection et de l'unité de contrôle de l'ensemble de protection thermique selon la figure 1 ;
- la figure 4 représente un chronogramme du déroulement du procédé de contrôle.

### DESCRIPTION DETAILLEE D'UN MODE DE REALISATION

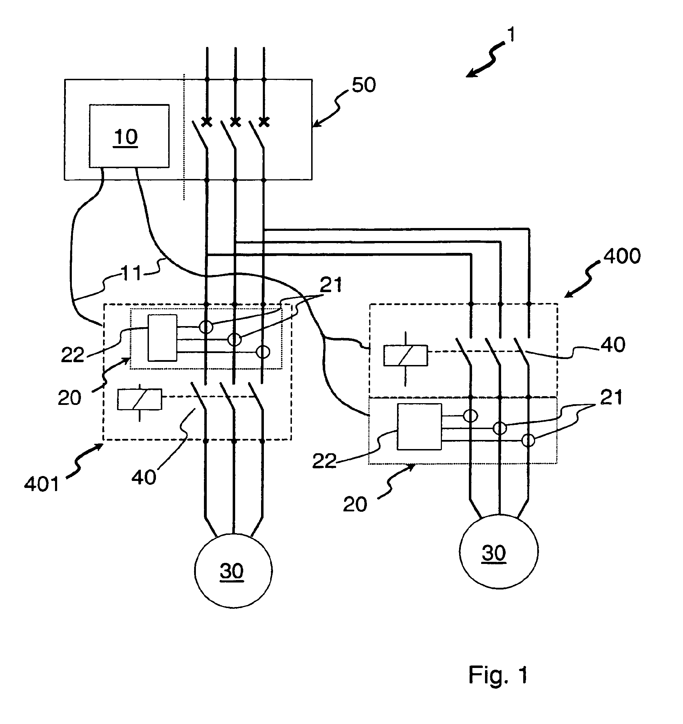

Selon un premier mode préférentiel de réalisation, l'ensemble de protection thermique 1 tel que représenté sur la figure 1 est destiné à la protection d'une charge 30. L'ensemble de protection 1 comprend une unité de contrôle 10 reliée par des moyens de communication 11 à au moins un bloc de protection 20 déporté. Selon un mode de réalisation particulier, l'unité de contrôle fait partie intégrante d'un dispositif de coupure 50 connecté en amont de l'ensemble des charges 30. Ledit dispositif de coupure 50 peut être un disjoncteur.

Lesdits moyens de communication 11 font partie d'un réseau de communication reliant notamment l'unité de contrôle 10 à un ou plusieurs blocs de protection 20 selon l'invention. Le réseau de communication peut aussi relier l'unité de contrôle 10 à d'autres moyens de protection thermique tels que par exemple des relais de protection thermique de type connu.

Selon un premier mode particulier de réalisation, le bloc de protection 20 est un dispositif indépendant qui peut être ajouté sur la ligne de courant afin d'être connecté à un dispositif de coupure 40 protégeant une charge 30. En termes de connectique, ledit bloc se comporte alors au même titre qu'un relais thermique standard 400.

Selon un second mode particulier de réalisation, le bloc de protection 20 peut faire partie intégrante d'un contacteur 401. Cette seconde configuration permet de réduire l'encombrement et le nombre de connexions au moment de l'installation des dispositifs de protection sur les charges 30.

Dans les deux modes particuliers, le bloc de protection 20 est connecté à l'unité de mesure 10 via des moyens de communication 11.

Le bloc de protection 20 comprend des moyens de mesure 21 du courant électrique 1 circulant dans la charge 30. Les moyens de mesure 21 sont reliés à des premiers moyens intégrateurs 22 destinés à calculer une première valeur d'intégration Va. Le bloc de protection 20 comprend une unité de communication 23 reliée aux premiers moyens intégrateurs 22 et étant apte à envoyer à l'unité de contrôle 10 la première valeur d'intégration Va via le réseau de communication.

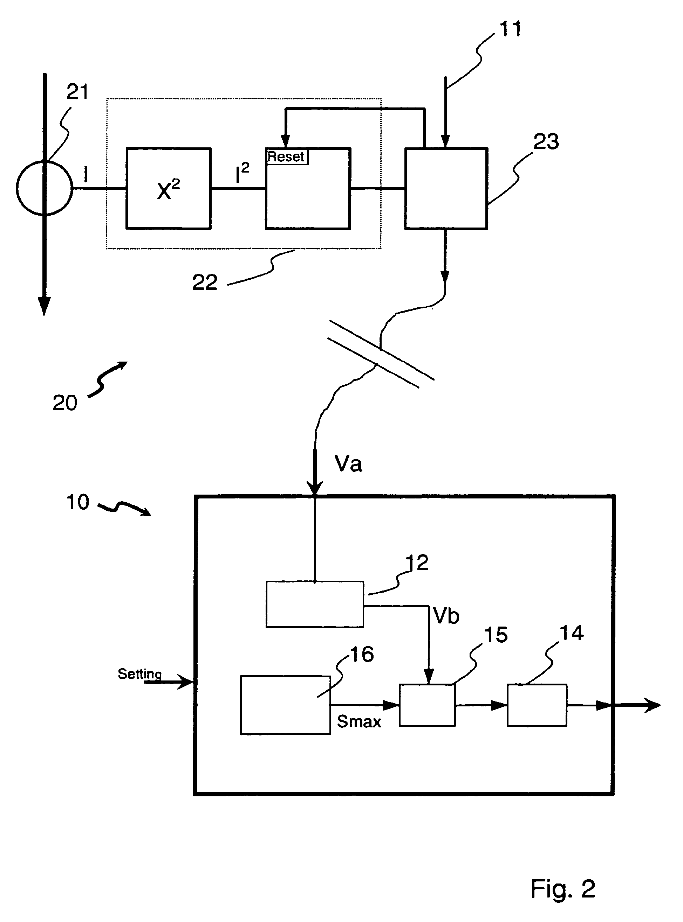

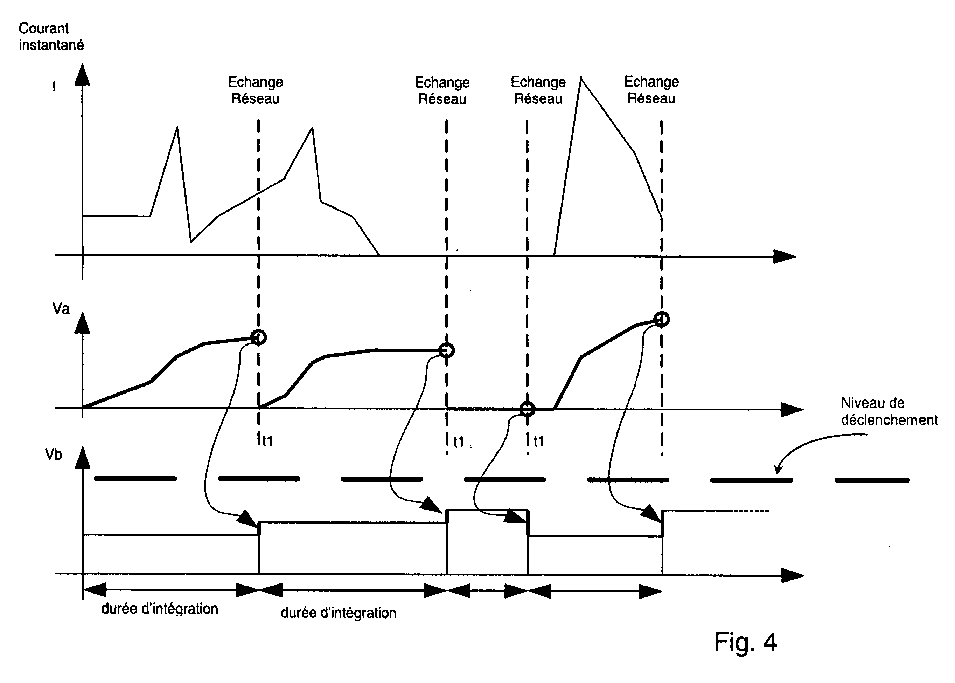

Selon un mode particulier de réalisation tel que représenté sur la figure 2, la valeur du courant électrique I mesurée est élevée au carré X² pour être ensuite intégrée. Les premiers moyens intégrateurs 22 effectuent un calcul d'intégration en continu pendant une première durée d'intégration t1. Tel que représenté sur le chronogramme de la figure 4, l'unité de communication 23 autorise aussi la mise à zéro (reset) du calcul d'intégration à chaque envoi d'une première valeur d'intégration Va après une première durée d'intégration t1.

La première durée d'intégration est directement dépendante d'un temps d'échange réseau entre les blocs de protection 20 déportés et l'unité de contrôle 10. Autrement dit, la première durée d'intégration est entièrement décorrélée du temps de cycle de l'unité de contrôle 10. Ainsi en fonction du type de réseau de communication utilisé pour les échanges entre les blocs de protection 20 et l'unité de contrôle 10 via les moyens de communication 11, la première durée d'intégration t1 peut être variable dans le temps. A titre d'exemple de réalisation, la première durée d'intégration est comprise entre 10 et 1000 ms.

L'unité de contrôle 10 de l'ensemble de protection 1 comporte des seconds moyens intégrateurs 12 calculant une seconde valeur d'intégration Vb pendant une seconde durée d'intégration t2.

Selon un premier mode de développement simplifié de l'invention tel que représenté sur la figure 2, les moyens intégrateurs 12 « emmagasinent » les premières valeurs d'intégration Va pendant un temps donné t2. Ladite seconde valeur d'intégration Vb correspond alors à l'intégration des premières valeurs d'intégration Va communiquées à l'unité de contrôle 10 après chaque première durée d'intégration t1. L'unité de contrôle 10 comporte des moyens de calcul 15 pour déterminer un état de fonctionnement thermique de la charge 30 à partir d'une comparaison entre la seconde valeur d'intégration Vb et un seuil de température maximale fixée Sₘₐₓ. Ce seuil thermique est préalablement enregistré (setting) dans un bloc mémoire 16 et correspond par exemple à un calibre d'appareil à protéger.

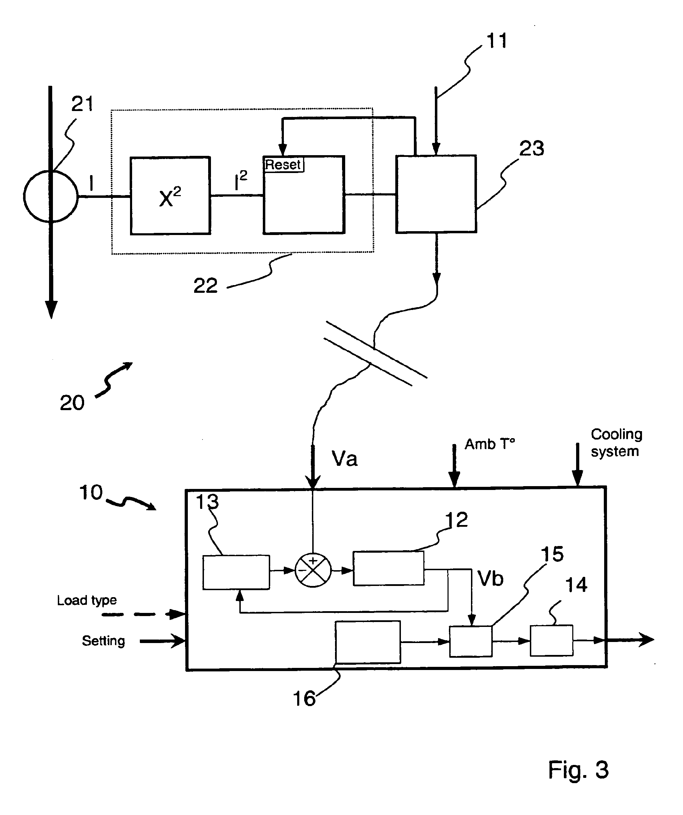

Selon un second mode de développement évolué de l'invention tel que représenté sur la figure 3, afin de garantir un niveau de fiabilité satisfaisant concernant la détermination de l'état de fonctionnement de la charge 30, les premières valeurs d'intégration Va sont pondérées par un coefficient de dissipation thermique liée à la nature de la charge à protéger. Ladite seconde valeur d'intégration Vb correspond à l'intégration en continu des premières valeurs d'intégration Va communiquées à l'unité de contrôle 10 après chaque première durée d'intégration t1, les premières valeurs d'intégration Va sont pondérées par un coefficient de dissipation thermique liée à la nature de la charge 30 à protéger. A titre d'exemple d'application, le coefficient de dissipation thermique liée à la nature de la charge 30 est soustrait à chaque première valeur d'intégration Va.

Selon ce second mode de fonctionnement, l'unité de contrôle 10 prend en compte un modèle de charge. Ledit modèle comporte en mémoire un fonctionnement simulé d'une charge (load type) donnée. Connaissant le comportement de la charge et son calibre, l'unité de contrôle 10 est apte à calculer dans un premier temps la dissipation thermique de la charge 30 et protéger ladite charge contre une élévation thermique relative. A titre d'exemple d'application, le niveau d'élévation de la température maximum accepté peut être fixé à 40°C par rapport à la température ambiante. Ainsi, si la température ambiante est de 0°C, la protection sera effective lorsque la température absolue de la charge atteindra 40°C. Si la température ambiante est de 30°C, la protection sera alors effective lorsque la température absolue de la charge atteindra 70°C.

Selon une variante de réalisation du second mode, l'unité de contrôle 10 prend en compte la température ambiante AmbT, température du lieu dans lequel est placée la charge 30. L'intégration de cette nouvelle donnée AmbT permet d'affiner en temps réel la dissipation thermique de la charge. En effet, s'il fait plus chaud, il y a moins de dissipation. A l'inverse, s'il fait plus froid, la charge se refroidira plus vite. Par ailleurs, il est possible de réaliser une protection thermique de façon absolue en protégeant par exemple une charge afin qu'elle ne dépasse pas un seuil thermique déterminé (80°C par exemple). A titre d'exemple, ce type de variante est particulièrement adapté aux panneaux photovoltaïques qui sont directement soumis à de fortes variations de températures extérieurs. A titre d'exemple, ce type de variante est aussi particulièrement adapté à des charges placées dans l'enceinte d'une usine mal isolée, où la température peut fortement varier entre l'hiver et l'été.

Selon une autre variante de réalisation du second mode, l'unité de contrôle prend en compte des paramètres applicatifs (cooling system) qui viennent influencer le calcul de la valeur thermique de la charge. Dans le cas d'un moteur moto-ventilé notamment avec un ventilateur extérieur, l'unité de contrôle 10 démarre le ventilateur, l'unité de contrôle 10 modifie aussi la valeur du coefficient de dissipation thermique. Dans le cas d'un moteur auto-ventilé commandé par un variateur de vitesse, la vitesse du ventilateur dépend alors de la vitesse du moteur. La charge 30 est alors soumise à une ventilation variable dans le temps. L'unité de contrôle 10 est apte à prendre en compte ce phénomène en intégrant la vitesse de rotation du ventilateur. En outre, si le fonctionnement du ventilateur est totalement indépendant du moteur à refroidir, ce ventilateur peut être lui-même relié à un variateur de vitesse. Ainsi, l'unité de contrôle 10 est apte à piloter le ventilateur avec une commande optimisée afin d'obtenir un refroidissement adapté et optimisé.

Selon les modes de réalisation, l'ensemble de protection 1 comporte des moyens de mémorisation 13 mémorisant le coefficient de dissipation thermique représenté à partir d'une mise en équations spécifiques dépendante du type de charge 30. Selon un autre mode de réalisation, les moyens de mémorisation 13 mémorisent le coefficient de dissipation thermique sous forme d'un tableau de données contenant une pluralité de valeurs de l'état de fonctionnement thermique et de type de charge 30.

L'unité de contrôle 10 comporte des moyens de commande 14 destinés à être reliés à un dispositif de coupure 40 par des moyens de communication 11. Le dispositif de coupure 40 tel que notamment un contacteur est destiné à isoler la ligne alimentant la charge 30. Les moyens de commande sont aptes à envoyer un ordre d'ouverture dudit dispositif de coupure 40 en fonction de l'état de fonctionnement thermique de la charge 30. Le bloc de protection 20 est destiné à être connectée en aval ou en amont du dispositif de coupure 40.

Selon un mode particulier de réalisation tel que représenté sur la figure 1, les moyens de communications sont de type filaire. Selon une variante de réalisation non représentée, les moyens de communications peuvent être de type radio.

Comme représenté sur la figure 4, l'invention est aussi relative à un procédé pour déterminer un état de fonctionnement thermique d'une charge 30 en mettant en oeuvre l'ensemble de protection thermique 1 selon les différents modes de réalisation de l'invention décrits ci-dessus. Le procédé selon l'invention consiste à:
- mesurer le courant électrique 1 circulant dans la charge 30 ;
- calculer une première valeur d'intégration Va correspondant à l'intégration en continu du courant électrique I pendant une première durée d'intégration t1 ;
- calculer une seconde valeur d'intégration Vb pendant une seconde durée d'intégration t2, ladite seconde valeur correspondant à l'intégration des premières valeurs d'intégration Va communiquées à l'unité de contrôle 10 après chaque première durée d'intégration t1 ;
- déterminer un état de fonctionnement thermique de la charge 30 à partir d'une comparaison entre la seconde valeur d'intégration Vb et un seuil Sₘₐₓ de température maximale fixée ;

Selon un mode de développement de l'invention, la seconde valeur d'intégration Vb est calculée en continu par les seconds moyens intégrateurs 12, les premières valeurs d'intégration Va étant pondérées par un coefficient de dissipation thermique liée à la nature de la charge 30 à protéger. Le procédé consiste ensuite à déterminer l'état de fonctionnement thermique de la charge 30 en comparant la seconde valeur d'intégration Vb, et un seuil de température maximale fixée Sₘₐₓ.

Selon un mode de développement de l'invention, le procédé consiste à envoyer un ordre d'ouverture à un dispositif de coupure 40 relié à l'unité de contrôle 10 en fonction de l'état de fonctionnement thermique déterminé.

## Revendications

1. Ensemble de protection thermique (1) destiné à la protection d'une charge (30) et comprenant une unité de contrôle (10) reliée par des moyens de communication (11) à au moins un bloc de protection (20) déporté ; ledit bloc comprenant :
- des moyens de mesure (21) du courant électrique (I) circulant dans la charge ;
- des premiers moyens intégrateur (22) calculant une première valeur d'intégration (Va) correspondant à l'intégration en continu du courant électrique (I) pendant une première durée d'intégration (t1),
ensemble, **caractérisé en ce que** l'unité de contrôle (10) comporte :
- des seconds moyens intégrateurs (12) calculant une seconde valeur d'intégration (Vb) pendant une seconde durée d'intégration (t2), ladite seconde valeur correspondant à l'intégration des premières valeurs d'intégration (Va) communiquées à l'unité de contrôle (10) après chaque première durée d'intégration (t1) ;
- des moyens de calcul (15) déterminant un état de fonctionnement thermique de la charge (30) à partir d'une comparaison entre la seconde valeur d'intégration (Vb) et un seuil de température maximale fixée (Sₘₐₓ).

2. Ensemble de protection selon la revendication 1, **caractérisé en ce que** la première durée d'intégration est directement dépendante d'un temps d'échange réseau entre les blocs de protection (20) déportés et l'unité de contrôle (10), la première durée d'intégration (t1) étant décorrélée du temps de cycle de l'unité de contrôle (10).

3. Ensemble de protection selon les revendications 1 ou 2, **caractérisé en ce que** la première durée d'intégration (t1) est variable dans le temps.

4. Ensemble de protection selon les revendications 2 ou 3, caractérisé que la première durée d'intégration (t1) est comprise entre 10 et 1000 ms.

5. Ensemble de protection selon l'une quelconque des revendications précédentes, **caractérisé en ce que** les seconds moyens intégrateurs (11) calculent la seconde valeur d'intégration (Vb) en continu, les premières valeurs d'intégration (Va) étant pondérées par un coefficient de dissipation thermique.

6. Ensemble de protection selon la revendication 5, **caractérisé en ce que** le coefficient de dissipation thermique est soustrait à la première valeur d'intégration (Va).

7. Ensemble de protection selon l'une quelconque des revendications précédentes, **caractérisé en ce que** l'unité de contrôle (10) comporte des moyens commande (14) destinés à être reliés à un dispositif de coupure (40) par des moyens de communication (11) et étant aptes à envoyer un ordre d'ouverture dudit dispositif en fonction de l'état de fonctionnement thermique.

8. Ensemble de protection selon l'une quelconque des revendications précédentes, **caractérisé en ce que** l'unité de contrôle (10) comporte des moyens de mémorisation mémorisant (13) le coefficient de dissipation thermique représenté à partir d'une mise en équations spécifiques dépendante du type de charge.

9. Ensemble de protection selon l'une quelconque des revendications 1 à 7, **caractérisé en ce que** l'unité de contrôle (10) comporte des moyens de mémorisation mémorisant le coefficient de dissipation thermique sous forme d'un tableau de données contenant une pluralité de valeurs de l'état de fonctionnement thermique et de type de charge (30).

10. Procédé pour déterminer un état de fonctionnement thermique d'une charge en mettant en oeuvre l'ensemble de protection thermique selon les revendications précédentes, procédé caractérisé en ce en qu'il consiste à :
- mesurer le courant électrique (I) circulant dans la charge (30) ;
- calculer une première valeur d'intégration (Va) correspondant à l'intégration en continu du courant électrique (I) pendant une première durée d'intégration (t1) ;
- calculer une seconde valeur d'intégration (Vb) pendant une seconde durée d'intégration (t2), ladite seconde valeur correspondant à l'intégration des premières valeurs d'intégration (Va) communiquées à l'unité de contrôle (10) après chaque première durée d'intégration (t1) ;
- déterminer un état de fonctionnement thermique de la charge (30) à partir d'une comparaison entre la seconde valeur d'intégration (Vb) et un seuil (Sₘₐₓ) de température maximale fixée.

11. Procédé selon la revendication 10, **caractérisé en ce que** la seconde valeur d'intégration (Vb) est calculée en continu par les seconds moyens intégrateurs (12), les premières valeurs d'intégration (Va) étant pondérées par un coefficient de dissipation thermique.

12. Procédé selon les revendications 10 ou 11, caractérisé en ce en qu'il consiste à envoyer un ordre d'ouverture à un dispositif de coupure (40) relié à l'unité de contrôle (10) en fonction de l'état de fonctionnement thermique déterminé.

## Patentansprüche

1. Thermische Schutzeinrichtung (1), die zum Schutz einer Last (30) dient und eine Steuereinheit (10) umfasst, welche über Kommunikationsmittel 11 an mindestens ein dezentrales Schutzmodul (20) angeschlossen ist, wobei das genannte Schutzmodul
- Messmittel (21) zur Messung des über die Last fließenden elektrischen Stroms (I),
- sowie erste Integriermittel (22) umfasst, welche einen ersten Integrationswert (Va) entsprechend einer kontinuierlichen Integration des elektrischen Stroms (I) über eine erste Integrationszeit (t1) berechnen,
**dadurch gekennzeichnet, dass** die Steuereinheit (10)
- zweite Integriermittel (12), welche einen zweiten Integrationswert (Vb) über eine zweite Integrationszeit (t2) berechnen, wobei der genannte zweite Integrationswert der Integration der ersten Integrationswerte (Va) entspricht, die nach jeder Integrationszeit (t1) an die Steuereinheit (10) übermittelt werden,
- sowie Rechenmittel (15) umfasst, die durch Vergleich des zweiten Integrationswerts (Vb) mit einem festgelegten maximalen Temperatur-Schwellwert (Sₘₐₓ) einen thermischen Betriebszustand der Last (30) bestimmen.

2. Schutzeinrichtung nach Anspruch 1, **dadurch gekennzeichnet, dass** die erste Integrationszeit direkt von einer Netzübermittlungszeit zwischen den dezentralen Schutzmodulen (20) und der Steuereinheit (10) abhängt, wobei die erste Integrationszeit (t1) von der Zykluszeit der Steuereinheit (10) entkoppelt ist.

3. Schutzeinrichtung nach Anspruch 1 oder 2, **dadurch gekennzeichnet, dass** die erste Integrationszeit (t1) eine variable Dauer aufweist.

4. Schutzeinrichtung nach Anspruch 2 oder 3, **dadurch gekennzeichnet, dass** die erste Integrationszeit (t1) zwischen 10 und 1000 ms beträgt.

5. Schutzeinrichtung nach irgendeinem der vorhergehenden Ansprüche, **dadurch gekennzeichnet, dass** die zweiten Integriermittel (11) den zweiten Integrationswert (Vb) kontinuierlich berechnen, wobei die ersten Integrationswerte (Va) mit einem Wärmeableitkoeffizienten gewichtet werden.

6. Schutzeinrichtung nach Anspruch 5, **dadurch gekennzeichnet, dass** der Wärmeableitkoeffizient vom ersten Integrationswert (Va) subtrahiert wird.

7. Schutzeinrichtung nach irgendeinem der vorhergehenden Ansprüche, **dadurch gekennzeichnet, dass** die Steuereinheit (10) Steuermittel (14) umfasst, die dazu dienen, über Kommunikationsmittel (11) mit einer Abschalteinrichtung (40) verbunden zu werden und einen Befehl zur Abschaltung der genannten Einrichtung in Abhängigkeit vom thermischen Betriebszustand absetzen können.

8. Schutzeinrichtung nach irgendeinem der vorhergehenden Ansprüche, **dadurch gekennzeichnet, dass** die Steuereinheit (10) Speichermittel (13) zur Speicherung des Wärmeableitkoeffizienten umfasst, welcher über spezifische, lastabhängige Zuordnungsgleichungen bestimmt wird.

9. Schutzeinrichtung nach irgendeinem der Ansprüche 1 bis 7, **dadurch gekennzeichnet, dass** die Steuereinheit (10) Speichermittel umfasst, die den Wärmeableitkoeffizienten in Form einer Wertetabelle mit mehreren Werten für den thermischen Betriebszustand und den Typ der Last (30) speichern.

10. Verfahren zur Bestimmung eines thermischen Betriebszustands einer Last mit Verwendung der thermischen Schutzeinrichtung nach einem der vorhergehenden Ansprüche, **dadurch gekennzeichnet, dass** das Verfahren darin besteht,
- den über die Last (30) fließenden elektrischen Strom (I) zu messen,
- einen ersten Integrationswert (Va) entsprechend einer kontinuierlichen Integration des elektrischen Stroms (I) über eine erste Integrationszeit (t1) zu berechnen,
- einen zweiten Integrationswert (Vb) über eine zweite Integrationszeit (t2) zu berechnen, wobei der genannte zweite Integrationswert der Integration der ersten Integrationswerte (Va) entspricht, die nach jeder Integrationszeit (t1) an die Steuereinheit (10) übermittelt werden,
- und einen thermischen Betriebszustand der Last (30) durch Vergleich des zweiten Integrationswerts (Vb) mit einem festgelegten maximalen Temperatur-Schwellwert (Sₘₐₓ) zu bestimmen.

11. Verfahren nach Anspruch 10, **dadurch gekennzeichnet, dass** der zweite Integrationswert (Vb) durch die zweiten Integriermittel (12) kontinuierlich berechnet wird, wobei die ersten Integrationswerte (Va) mit einem Wärmeableitkoeffizienten gewichtet werden.

12. Verfahren nach Anspruch 10 oder 11, **dadurch gekennzeichnet, dass** es darin besteht, einen von dem bestimmten Wärmeableitkoeffizienten abhängigen Ausschaltbefehl an eine mit der Steuereinheit (10) verbundene Abschalteinrichtung (40) zu senden.

## Claims

1. A thermal protection assembly (1) designed for protection of a load (30) and comprising a control unit (10) connected by communication means (11) to at least one remote protection unit (20), said unit comprising :
- means (21) for measuring the electric current (I) flowing in the load;
- first integrating means (22) calculating a first integration value (Va) corresponding to continuous integration of the electric current (I) during a first integration time (t1),
an assembly **characterized in that** the control unit (10) comprises:
- second integrating means (12) calculating a second integration value (Vb) during a second integration time (t2), said second value corresponding to integration of the first integration values (Va) communicated to the control unit (10) after each first integration time (t1);
- computing means (15) determining a thermal operating state of the load (30) from a comparison between the second integration value (Vb) and a set maximum temperature threshold (sax).

2. The protection assembly according to claim 1, **characterized in that** the first integration time is directly dependent on a network exchange time between the remote protection units (20) and the control unit (10), the first integration time (t1) being decorrelated from the cycle time of the control unit (10).

3. The protection assembly according to claim 1 or 2, **characterized in that** the first integration time (t1) is variable in time.

4. The protection assembly according to claim 2 or 3, **characterized in that** the first integration time (t1) is comprised between 10 and 1000 ms.

5. The protection assembly according to any one of the foregoing claims, **characterized in that** the second integrating means (11) calculate the second integration value (Vb) continuously, the first integration values (Va) being weighted by a thermal dissipation coefficient.

6. The protection assembly according to claim 5, **characterized in that** the thermal dissipation coefficient is subtracted from the first integration value (Va).

7. The protection assembly according to any one of the foregoing claims, **characterized in that** the control unit (10) comprises control means (14) designed to be connected to a switchgear device (40) by communication means (11) and being designed to send an opening order of said device according to the thermal operating state à.

8. The protection assembly according to any one of the foregoing claims, **characterized in that** the control unit (10) comprises storage means (13) storing the thermal dissipation coefficient represented from specific equating dependent on the type of load.

9. The protection assembly according to any one of claims 1 to 7, **characterized in that** the control unit (10) comprises storage means storing the thermal dissipation coefficient in the form of a data table containing a plurality of values of the thermal operating state and of the type of load (30).

10. A method for determining a thermal operating state of a load by implementing the thermal protection assembly according to the foregoing claims, a method **characterized in that** it consists in:
- measuring the electric current (I) flowing in the load (30);
- calculating a first integration value (Va) corresponding to continuous integration of the electric current (I) during a first integration time (t1);
- calculating a second integration value (Vb) during a second integration time (t2), said second value corresponding to integration of the first integration values (Va) communicated to the control unit (10) after each first integration time (t1);
- determining a thermal operating state of the load (30) from a comparison between the second integration value (Vb) and a set maximum temperature threshold (Smax).

11. The method according to claim 10, **characterized in that** the second integration value (Vb) is calculated continuously by the second integrating means (12), the first integration values (Va) being weighted by a thermal dissipation coefficient.

12. The method according to claims 10 or 11, **characterized in that** it consists in sending an opening order to the switchgear device (40) connected to the control unit (10) according to the determined thermal operating state.
